(19) Europäisches Patentamt
European Patent Office
Office européen des brevets

(11) **EP 4 306 321 B1**

(12) **EUROPEAN PATENT SPECIFICATION**

(45) Date of publication and mention
of the grant of the patent:
**06.05.2026 Bulletin 2026/19**

(21) Application number: **22788195.0**

(22) Date of filing: **13.04.2022**

(51) International Patent Classification (IPC):
**B33Y 10/00** (2015.01)    **B33Y 50/02** (2015.01)
**B23K 9/032** (2006.01)    **B23K 9/04** (2006.01)
**B23K 9/095** (2006.01)    **B33Y 30/00** (2015.01)

(52) Cooperative Patent Classification (CPC):
**B33Y 10/00; B23K 9/032; B23K 9/044;
B23K 9/0953; B23K 9/0956; B33Y 30/00;
B33Y 50/02;** B22F 10/25; Y02P 10/25

(86) International application number:
**PCT/JP2022/017744**

(87) International publication number:
**WO 2022/220272 (20.10.2022 Gazette 2022/42)**

(54) **ADDITIVE MANUFACTURING METHOD, ADDITIVE MANUFACTURING APPARATUS, AND PROGRAM FOR MANUFACTURING ADDITIVELY MANUFACTURED ARTICLE**

VERFAHREN ZUR GENERATIVEN FERTIGUNG, VORRICHTUNG ZUR GENERATIVEN FERTIGUNG UND PROGRAMM ZUR HERSTELLUNG EINES GENERATIV GEFERTIGTEN ARTIKELS

PROCÉDÉ DE FABRICATION ADDITIVE, APPAREIL DE FABRICATION ADDITIVE ET PROGRAMME POUR FABRIQUER UN ARTICLE FABRIQUÉ DE MANIÈRE ADDITIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2021 JP 2021070002**

(43) Date of publication of application:
**17.01.2024 Bulletin 2024/03**

(73) Proprietor: **KABUSHIKI KAISHA KOBE SEIKO SHO (KOBE STEEL, LTD.)
Hyogo 651-8585 (JP)**

(72) Inventor: **YOSHIKAWA, Akinori
Kobe-shi, Hyogo 651-2271 (JP)**

(74) Representative: **Müller-Boré & Partner
Patentanwälte PartG mbB
Friedenheimer Brücke 21
80639 München (DE)**

(56) References cited:
JP-A- 2018 027 558    JP-A- 2018 149 570
JP-A- 2018 158 382    JP-A- 2018 158 382
JP-A- 2019 089 108    JP-A- 2020 001 059
JP-A- 2020 006 378    JP-B1- 6 797 324

**Description**

TECHNICAL FIELD

The present invention relates to an additively manufacturing method, an additive manufacturing device, and a program for building an additively manufactured object.

BACKGROUND ART

In recent years, there is an increasing need for shaping using a 3D printer as means for production, and research and development are proceeding toward practical use of shaping using a metal material. A 3D printer that builds a metal material uses a heat source such as laser beams, electron beams, and arcs to melt a metal powder or a metal wire, and deposits the molten metal to create an additively manufactured object. For example, Patent Literature 1 describes a technique in which, when an additively manufactured object is manufactured by depositing weld beads obtained by melting and solidifying a wire-like metallic material (filler metal), a welding output current and a filler metal feed speed are sampled, a distance from a contact tip of a welding torch to a welding base material is estimated based on the sampled information, and a welding speed and a filler metal feed speed are adjusted such that error of a bead height is small.

CITATION LIST

PATENT LITERATURE

Patent Literature 1: JP2018-158382A

SUMMARY OF INVENTION

TECHNICAL PROBLEM

However, the adjustment of the height of the weld layer described in Patent Literature 1 is not always appropriately performed. For example, when any variation occurs in welding conditions, an operation of adjusting the occurred variation may be performed by maintaining a set value of a specific welding condition that causes the variation as it is and changing set values of the other welding conditions. Here, an expected adjustment operation may not be performed.

For example, regarding the filler metal feed speed at which the filler metal is supplied to the welding torch, a control system of the device during bead formation sets the speed to feed the filler metal. When the set values of the other welding conditions change depending on the filler metal feed speed, a command value set by the control is used for drive control in many cases assuming that the command value is the same as an actual filler metal supply speed.

Therefore, when the command value of the control is different from the actual feed speed due to some factor, appropriate drive control is not performed. As a result, the height of the weld layer varies, and a shape error occurs in the additively manufactured object.

Accordingly, an object of the present invention is to provide an additively manufacturing method, an additive manufacturing device, and a program form building an additively manufactured object in which a feed speed of a filler metal can be accurately grasped, a height of a weld bead can be more accurately managed, and a high-accuracy additively manufactured object can be obtained.

SOLUTION TO PROBLEM

The present invention has the following configurations.

(1) An additively manufacturing method in which, while moving a welding torch having a tip portion to which a filler metal is supplied, the supplied filler metal is melted and solidified to form a weld bead, and plural layers of the weld beads are deposited to build an additively manufactured object, the additively manufacturing method including:

a step of measuring a filler metal feed speed at which the filler metal is fed to the welding torch during the formation of the weld bead;
a step of acquiring a reference welding speed that is a moving speed of the welding torch corresponding to the measured filler metal feed speed;
a step of measuring a height of the formed weld bead;

a step of acquiring a welding speed correction value with which the height of the weld bead to be formed is adjusted based on a difference between the measured height of the weld bead and a height of a tip of the filler metal that protrudes from the tip of the welding torch;

a step of correcting the reference welding speed with the welding speed correction value and determining a welding speed at which the weld bead is formed; and

a step of forming the weld bead at the determined welding speed.

(2) An additive manufacturing device in which, while moving a welding torch having a tip portion to which a filler metal is supplied, the supplied filler metal is melted and solidified to form a weld bead, and plural layers of the weld beads are deposited to build an additively manufactured object, the additive manufacturing device including:

a filler metal feed speed measuring unit configured to measure a filler metal feed speed at which the filler metal is fed to the welding torch during the formation of the weld bead;

a reference welding speed setting unit configured to acquire a reference welding speed that is a moving speed of the welding torch corresponding to the measured filler metal feed speed;

a bead height measuring unit configured to measure a height of the formed weld bead;

a correction value setting unit configured to acquire a welding speed correction value with which the height of the weld bead to be formed is adjusted based on a difference between the measured height of the weld bead and a height of a tip of the filler metal that protrudes from the tip of the welding torch;

a welding speed determination unit configured to correct the reference welding speed with the welding speed correction value and to determine a welding speed at which the weld bead is formed; and

a bead forming unit configured to form the weld bead at the determined welding speed.

(3) A program causing a computer to execute an additively manufacturing procedure in which, while moving a welding torch having a tip portion to which a filler metal is supplied, the supplied filler metal is melted and solidified to form a weld bead, and plural layers of the weld beads are deposited to build an additively manufactured object, the additive manufacturing procedure including:

a function of measuring a filler metal feed speed at which the filler metal is fed to the welding torch during the formation of the weld bead;

a function of acquiring a reference welding speed that is a moving speed of the welding torch corresponding to the measured filler metal feed speed;

a function of measuring a height of the formed weld bead;

a function of acquiring a welding speed correction value with which the height of the weld bead to be formed is adjusted based on a difference between the measured height of the weld bead and a height of a tip of the filler metal that protrudes from the tip of the welding torch;

a function of correcting the reference welding speed with the welding speed correction value and determining a welding speed at which the weld bead is formed; and

a function of forming the weld bead at the determined welding speed.

ADVANTAGEOUS EFFECTS OF INVENTION

According to the present invention, a feed speed of a filler metal can be accurately grasped, and a height of a weld bead can be more accurately managed. As a result, a high-accuracy additively manufactured object can be obtained.

BRIEF DESCRIPTION OF DRAWINGS

FIG. 1 is a schematic configuration diagram illustrating an additive manufacturing device.
FIG. 2 is a functional block diagram illustrating a control unit and each of units connected to the control unit.
FIG. 3 is a flowchart illustrating a building procedure of an additively manufactured object.
FIG. 4 is a graph illustrating a relationship between a filler metal feed speed and a reference welding speed registered in a database.
FIG. 5 is a diagram illustrating a formed weld bead and a planning line of the weld bead.
FIG. 6 is a diagram illustrating a correspondence between a planned height error of a weld bead and a welding speed.
FIG. 7 is a diagram illustrating change characteristics in bead height of a starting edge portion and an end edge portion of a bead formation path of a weld bead.

DESCRIPTION OF EMBODIMENTS

Hereinafter, an embodiment of the present invention will be described in detail with reference to the drawings.

<Additive Manufacturing Device>

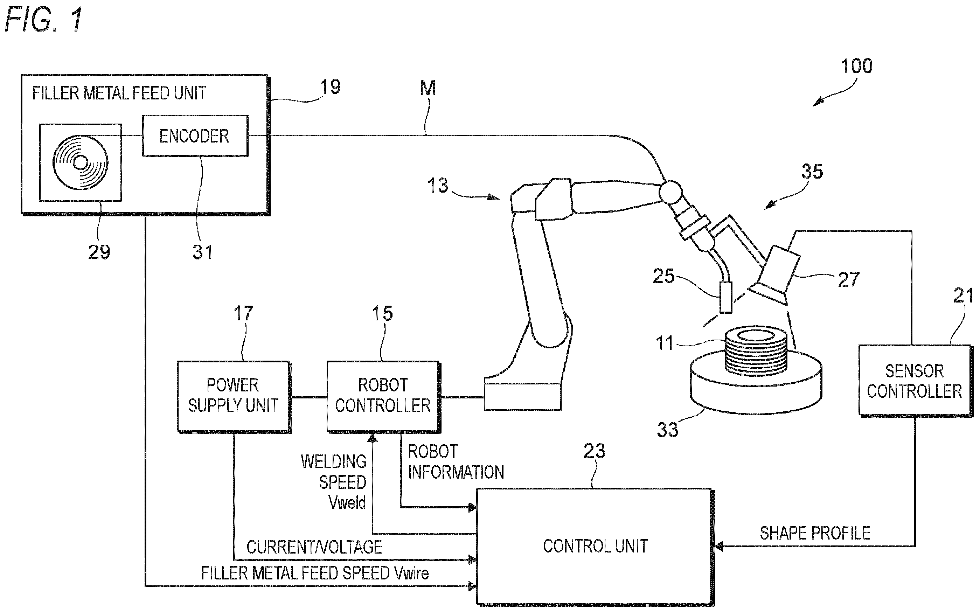

FIG. 1 is a schematic configuration diagram illustrating an additive manufacturing device.

An additive manufacturing device 100 having the present configuration is a device for manufacturing an additively manufactured object 11 and includes a welding robot 13, a robot controller 15, a power supply unit 17, a filler metal supply unit 19, a shape sensor 27, a sensor controller 21, and a control unit 23.

The welding robot 13 is an articulated robot, in which a filler metal M is continuously suppliable to and supported in a welding torch 25 attached to a tip axis of a robot arm. Any position and any posture of the welding torch 25 can be three-dimensionally set in a range of degree of freedom of the robot arm.

The welding torch 25 includes a shield nozzle (not illustrated) and is supplied with shielding gas from the shield nozzle. An arc welding method used herein may be any of a consumable electrode type such as shielded metal arc welding or $CO_2$ gas arc welding or a non-consumable electrode type such as TIG welding or plasma arc welding, and is appropriately selected depending on the additively manufactured object to be prepared.

For example, in the consumable electrode type, a contact tip is disposed in the shield nozzle, and the filler metal M to which a melting current is supplied is held in the contact tip. The welding torch 25 generates an arc from a tip of the filler metal M in a shielding gas atmosphere while holding the filler metal M.

In the welding robot 13, the shape sensor 27 is provided in the vicinity of the welding torch 25. The shape sensor 27 may be a laser sensor that detects reflected light of irradiated laser light to acquire height information or may be a camera that can measure a three-dimensional shape. The sensor controller 21 outputs a shape profile of the additively manufactured object 11 (weld bead described below) that is acquired based on an output of the shape sensor 27 to the control unit 23.

The robot controller 15 drives each of the units of the welding robot 13 in response to a command from the control unit 23. The power supply unit 17 supplies a welding current and a welding voltage to the welding torch 25 of the welding robot 13 through the robot controller 15.

The filler metal supply unit 19 includes: a reel 29 around which the filler metal M is wound; and an encoder 31 that measures a feed speed of the filler metal M drawn from the reel 29 and fed to the welding robot 13.

As the filler metal M, various commercially available welding wires can be used. For example, wires defined by solid wires (JIS Z 3312) for MAG and MIG welding of mild steel, high strength steel, and low temperature service steel or flux cored wires (JIS Z 3313) for arc welding of mild steel, high strength steel, and low temperature service steel can be used.

The control unit 23 integrally controls each of the above-described units of the additive manufacturing device 100. The control unit 23 is configured by a computer device including a CPU, a memory, a storage, and the like, and builds the additively manufactured object 11 by executing a program (building program) on the memory or the storage.

In the additive manufacturing device 100, the control unit 23 drives the welding robot 13 and the power supply unit 17 by executing the building program stored in the memory or the storage. That is, the control unit 23 drives the welding robot 13 and the power supply unit 17 according to a procedure (bead formation path) set by the building program, moves the welding torch 25 along the bead formation path, heats the filler metal M by arc welding at the torch tip, and deposits the molten filler metal M on a base plate 33. As a result, a linear weld bead that is a melt-solidified product of the filler metal M is formed on the base plate 33, and the weld bead is sequentially deposited to build the additively manufactured object 11. The building program is an instruction code set where procedures such as the movement of the welding robot 13 or the control of the power supply unit 17 are sequentially recorded, and the control unit 23 sequentially executes the instruction codes of the building program.

That is, the welding robot 13, the robot controller 15, and the power supply unit 17 described above function as a bead forming unit 35 to build the additively manufactured object 11.

A configuration of the additive manufacturing device 100 described herein is merely exemplary, and another configuration may be adopted. For example, by fixing the welding torch 25 and moving the base plate 33 or by moving the welding torch 25 and the base plate 33, the welding torch 25 and the base plate 33 may move relative to each other to build the additively manufactured object 11.

The heat source that melts the filler metal M is not limited to the above-described arc. For example, a heat source using another method such as a heating method using an arc and a laser in combination, a heating method using a plasma, or a heating method using an electron beam or a laser may be adopted. When the filler metal M is heated by an electron beam or a laser, the amount of heat can be controlled more finely, and the state of the weld beads can be more accurately maintained, which can contribute to further improvement of the quality of the additively manufactured object.

Next, a procedure of building the additively manufactured object using the additive manufacturing device 100 having the above-described configuration will be described.

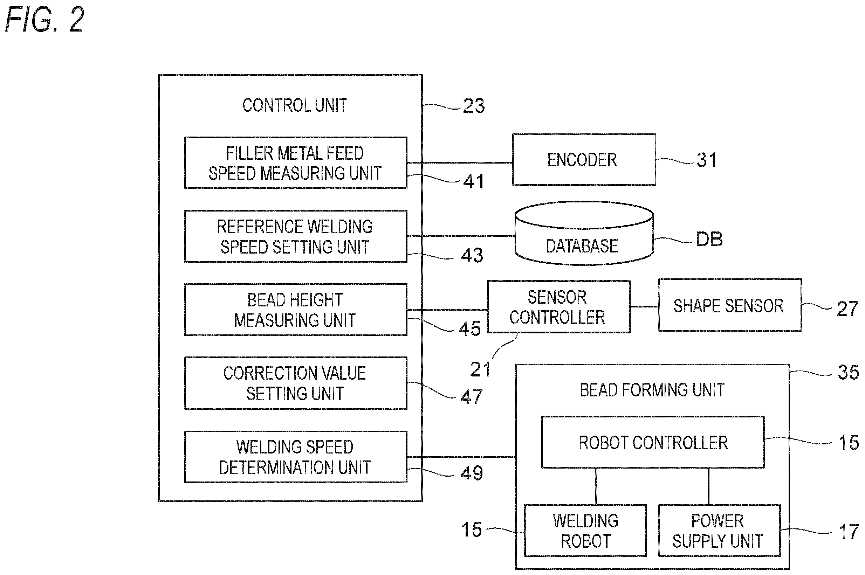

FIG. 2 is a functional block diagram illustrating the control unit 23 and each of the units connected to the control unit 23.

The control unit 23 includes a filler metal feed speed measuring unit 41, a reference welding speed setting unit 43, a bead height measuring unit 45, a correction value setting unit 47, and a welding speed determination unit 49, and causes each of the units to function as schematically described below such that an additively manufactured object having a desired shape is built by the bead forming unit 35.

The filler metal feed speed measuring unit 41 measures a filler metal feed speed at which the filler metal M is fed to the welding torch 25 based on an output of the encoder 31 during the formation of the weld bead.

Although the details will be described below. the reference welding speed setting unit 43 refers to a database DB representing a relationship between the measured filler metal feed speed and a reference welding speed set for the filler metal feed speed to acquire the corresponding reference welding speed based on the measured filler metal feed speed from a predetermined conversion formula, correspondence table, or the like that is prepared in advance.

The bead height measuring unit 45 measures a height of the formed weld bead based on information regarding the shape profile that is created by the sensor controller 21 based on the output from the shape sensor 27.

The correction value setting unit 47 acquires a welding speed correction value with which the height of the weld bead to be formed is adjusted based on a difference between the measured height of the weld bead and a height of a tip of the filler metal M that protrudes from the tip of the welding torch 25.

The welding speed determination unit 49 corrects the reference welding speed with the welding speed correction value and determines a welding speed for forming the weld bead of which the height is adjusted.

The control unit 23 outputs a command for moving the welding torch at the determined welding speed to form the weld bead to the bead forming unit 35, and forms the weld bead while adjusting the bead height.

Next, a specific building procedure of the above-described additively manufactured object will be described in more detail.

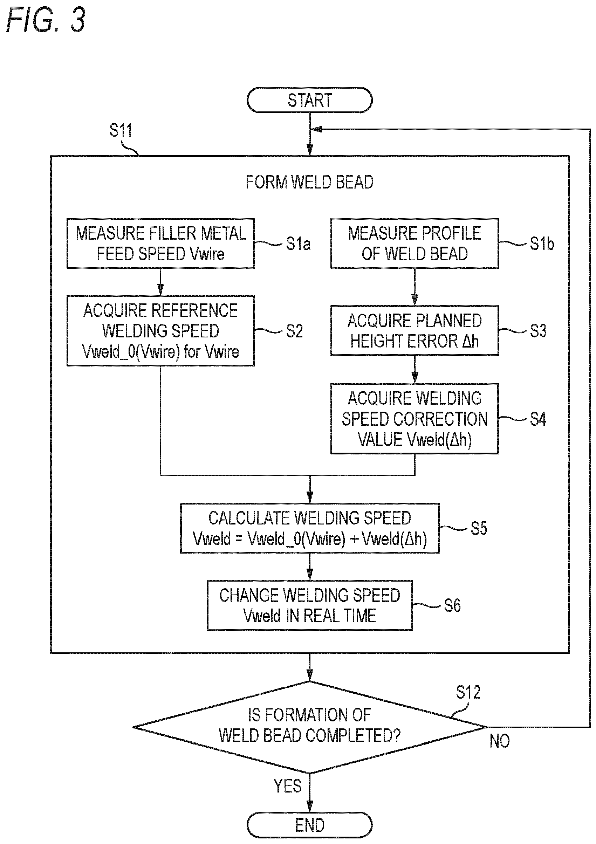

FIG. 3 is a flowchart illustrating the building procedure of the additively manufactured object. Hereinafter, the specific building procedure will be described appropriately with reference to FIGS. 1 and 2.

The control unit 23 reads a building program corresponding to the shape of the additively manufactured object to be built, and drives each of the units of the additive manufacturing device 100 to form the weld bead based on the read building program (S11).

In the step (S11) of forming the weld bead, the weld bead is formed while moving the welding torch 25 using the welding robot 13, and the filler metal feed speed measuring unit 41 measures a filler metal feed speed Vwire of the filler metal M supplied to the welding torch 25 based on an output signal of the encoder 31 (S1a). The sensor controller 21 measures a shape profile based on the output signal of the shape sensor 27 that detects the height of the formed weld bead (S1b).

Next, the reference welding speed setting unit 43 refers to the database DB that is prepared in advance to acquire a reference welding speed $Vweld_0(Vwire)$ corresponding to the measured filler metal feed speed Vwire(S2). The database DB stores a relationship between the filler metal feed speed Vwire and reference welding speed Vweld_0 capable of welding at the speed. The database DB may be a correspondence table between the filler metal feed speed Vwire and the reference welding speed $Vweld_0$ or may be a function $Vweld_0(Vwire)$ or arithmetic equation of reference welding speed where the filler metal feed speed Vwire is a variable.

Examples of a method of calculating the reference welding speed $Vweld_0(Vwire)$ include a method of calculating the reference welding speed $Vweld_0$ in real time from the filler metal feed speed Vwire measured during welding and a method of calculating the reference welding speed $Vweld_0$ from an average value of the filler metal feed speed Vwire during weld bead formation of a previous layer or a previous path.

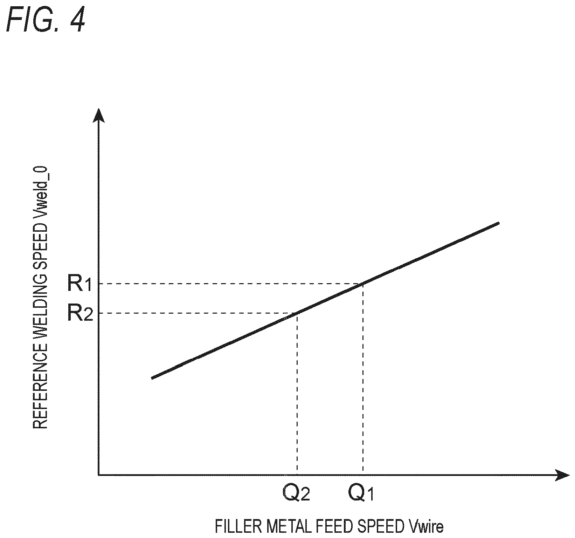

FIG. 4 is a graph illustrating a relationship between the filler metal feed speed Vwire and the reference welding speed $Vweld_0$ registered in the database DB. The graph is merely exemplary, and the relationship between the filler metal feed speed Vwire and the reference welding speed $Vweld_0$ changes depending on device configurations, materials, or conditions for welding or the like (for example, conditions where the deposit amount is constant and the amount of heat input is constant).

As illustrated in FIG. 4, the database DB has a characteristic in which, as the filler metal feed speed Vwire increases, the reference welding speed $Vweld_0$ increases, and such relationship is acquired experimentally or by analysis using a model. For example, when the filler metal feed speed Vwire is measured by the encoder 31 and the measured value deviates to Q2 from Q1 as a set value, the reference welding speed setting unit 43 changes the reference welding speed $Vweld_0(Vwire)$ from R1 to R2. The setting of the reference welding speed $Vweld_0(Vwire)$ will be described below in detail.

The characteristic illustrated in FIG. 4 may be a characteristic in which, when a planned height of the weld bead is set to $H_0$ and an estimated height thereof is set to ha, a difference between $H_0$ and ha is 0 using an experimental empirical equation (or model) of bead height. For example, the planned height $H_0$ and the estimated height ha are defined as shown

in Equation (1).

$$H_0 = ha$$
$$= C_1 + C_2 Vwire + C_3 Vweld + C_4 Vwire^2$$
$$+ C_5 Vweld^2 + C_6 Vwire\ Vweld\ ... \qquad\qquad \text{Equation (1)}$$

Here, when the effect of the squared term in Equation (1) is ignorable and the constant term is rearranged as D, a linear relationship between the welding speed Vweld and the feed speed Vwire is obtained as shown in Equation (2).

$$Vweld = (C_2/C_3)Vwire + D \qquad ... \qquad\qquad \text{Equation (2)}$$

Accordingly, when the feed speed Vwire varies, by changing the welding speed Vweld based on Equation (2), the difference between the planned height $H_0$ and the estimated height ha can be reduced. With such configuration, the deviation between the planned height $H_0$ and the estimated height ha is reduced, and finally the actual height and the planned height are easily matched to each other.

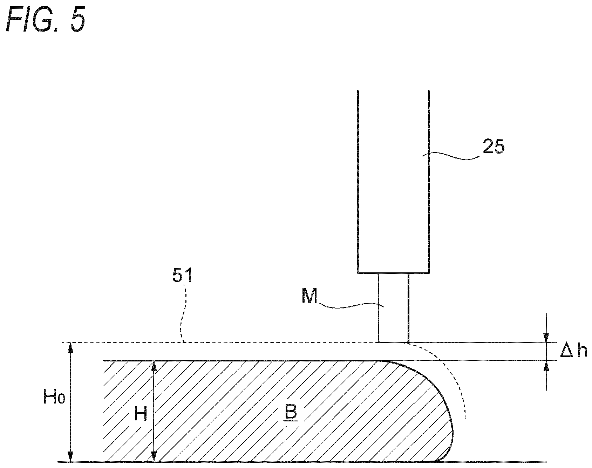

FIG. 5 is a diagram illustrating a formed weld bead B and a planning line 51 of the weld bead B.

The planning line 51 is a target shape of the weld bead B, and a height $H_0$ of the weld bead B corresponds to the height of the tip of the filler metal M that protrudes from the tip of the welding torch 25. The dimension of the height H0 is geometrically acquired from coordinate information based on which the welding robot 13 is driven.

The bead height measuring unit 45 acquires a difference (planned height error) $\Delta h$ (= $H_0$ - H) between an actual value H of the height of the weld bead obtained from the information regarding the shape profile from the sensor controller 21 and the planned height $H_0$ of the weld bead acquired from the building program (S3).

The correction value setting unit 47 acquires a welding speed correction value corresponding to the acquired planned height error $\Delta h$.

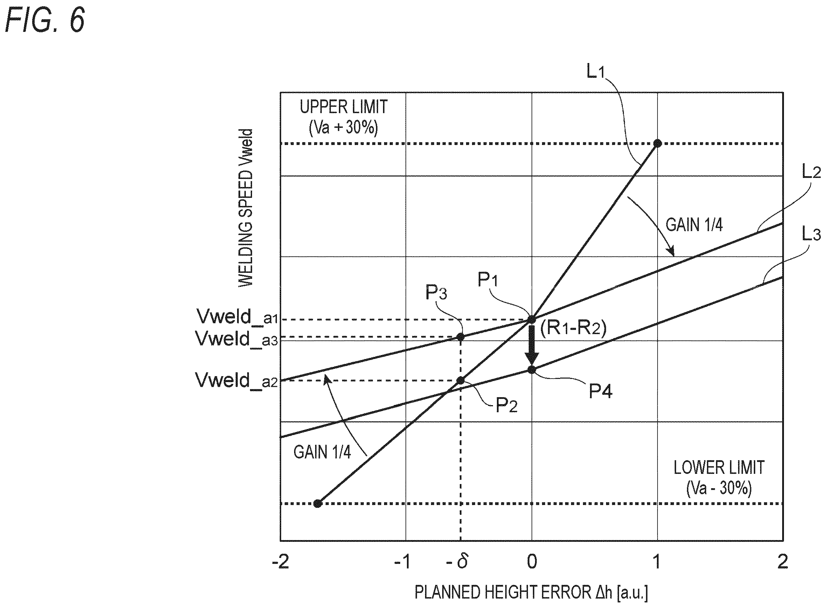

FIG. 6 is a diagram illustrating a correspondence between the planned height error of the weld bead and the welding speed.

As illustrated in FIG. 6, the welding speed Vweld at which the welding torch 25 moves is corrected based on the planned height error $\Delta h$, and the weld bead is formed at the corrected welding speed.

For example, it is assumed that the welding speed where the planned height error $\Delta h$ is 0 (the reference welding speed $Vweld_{\_0}$ acquired from the filler metal feed speed Vwire) is a welding speed $Vweld_{\_a1}$ shown at a point P1. If the planned height error $\Delta h$ is generated by $-\delta$, the welding speed is changed to a welding speed $Vweld_{\_a2}$ at a point P2 along a reference characteristic line L1 that is preset. Here, however, a correction amount Vweld($\Delta h$) of the welding speed may become excessive such that the control of the bead height is unstable. Accordingly, using a characteristic line L2 obtained by intentionally reducing the gain (slope of the characteristic line) of the characteristic line L1, a welding speed $Vweld_{\_a3}$ at a point P3 corresponding to $-\delta$ is set.

Here, the gain of the characteristic line L2 is reduced to 1/4 of the characteristic line L1. The gain is appropriately set based on findings by an experiment, analysis, or the like. It is preferable that the characteristic lines L1 and L2 and a characteristic line L3 described below are set in a range of $\pm 30\%$ with respect to the welding speed $Vweld_{\_a1}$ to set the upper limit of the correction amount.

As such, when the planned height error $\Delta h$ is generated, a correction value with which the welding speed is adjusted (changed from $Vweld_{\_a1}$ to $Vweld_{\_a3}$) based on the planned height error $\Delta h$ is set (S4). By correcting the welding speed with the correction value, the height of the weld bead to be formed can be more rapidly matched to the planned height while preventing overshoot and hunting.

In the additively manufacturing method having the present configuration, in addition to the above-described correction, by measuring the filler metal feed speed Vwire with the filler metal supply unit 19, the reliability of the set value of the welding speed $Vweld_{\_a1}$ is further improved.

For example, when the set value of the filler metal feed speed Vwire is set to Q1 illustrated in FIG. 4 described above, it is assumed that the actual feed speed is Q2. In the related art, even here, the reference welding speed R1 is set to the point P1 of FIG. 6, and the filler metal feed speed Vwire is set to the welding speed along the characteristic line L2 based on the planned height error $\Delta h$ centering on the point P1. In such method, there is a deviation between the set value of the filler metal feed speed and the actual value. Therefore, it is difficult to control the height of the weld bead to a set height.

Accordingly, in the present configuration, when the filler metal feed speed Vwire is actually measured and the measurement result is set to Q2, the reference welding speed $Vweld_{\_0}$ is set to R2 corresponding to Q2, and the filler metal feed speed is set to a welding speed corresponding to the planned height error $\Delta h$ centering on R2. That is, a characteristic line L3 obtained by translating the characteristic line L2 to pass through a point P4 is set centering on the point P4 where the welding speed is corrected from the point P1 illustrated in FIG. 6 by R1 - R2. A welding speed corresponding to a set height error $\Delta h$ is acquired along the characteristic line L3 (S5).

That is, the welding speed Vweld is set from Equation (3).

$$Vweld = Vweld\_0(Vwire) + Vweld(\Delta h) \quad ... \quad (3)$$

Here, $Vweld\_0(Vwire)$ is a reference welding speed corresponding to the actual value of the filler metal feed speed, and $Vweld(\Delta h)$ refers to the amount of the welding speed that is adjusted to increase or decrease to compensate for the planned height error $\Delta h$.

The more details will be described. For example, when a set value of the feed speed is set to $Vwire\_f_0$ and an actual value thereof is set to $Vwiref_1 (\neq Vwire\_f_0)$, the planned height $H_0$ and the estimated height ha are expressed by Equation (4) and Equation (5), respectively.

$$H_0 = C_1 + C_2 \, Vwire\_f_0 + C_3 \, Vweld + ... \quad ... \quad \text{Equation (4)}$$

$$ha = C_1 + C_2 \, Vwire\_f_1 + C_3 \, Vweld + ... \quad ... \quad \text{Equation (5)}$$

Accordingly, a difference between the planned height H0 and the estimated height ha is expressed by Equation (6).

$$\begin{aligned}
\left| H_0 - ha \right| &= \left| C_2 \, (Vwire\_f_0 - Vwire\_f_1) \right.\\
&+ C_4 \, (Vwire\_f_0{}^2 - Vwire\_f_1{}^2)\\
&+ \left. C_6 \, Vweld \, (Vwire\_f_0 - Vwire\_f_1) \right|\\
&= f(Vwire\_f_1, Vweld) \quad ... \quad \text{Equation (6)}
\end{aligned}$$

Based on Equation (6), a value $Vweld\_1$ to which the welding speed changes from the initial set value $Vweld\_0$ to satisfy Equation (7) is searched for.

$$f(Vwire\_f_1, Vweld\_0) > f(Vwire\_f_1, Vweld\_1) \quad ... \quad (7)$$

Accordingly, the reference welding speed for compensating for the deviation in feed speed can be acquired, and the reference welding speed can be set while expecting the difference between the planned height and the estimated height to some extent. Regarding the difference $| H_0 - ha|$ between the planned height H0 and the estimated height ha, a value that is realistically assumed according to the estimation accuracy may be provided in advance as an allowable upper limit value in the left side of Equation (7).

The acquired welding speed Vweld is changed in real time (S6). Accordingly, the procedures of S11 described above (each of the procedures of S1a and S1b to S6) are repeated until the formation of all the weld beads is completed (S12).

With the above-described configuration, when the set value of the filler metal feed speed and the actual filler metal feed speed do not match with each other, the occurrence of shape error caused by an inaccurate control can be prevented in advance, the correction to a planned accurate bead height can be reliably performed, and an additively manufactured object can be accurately built as designed.

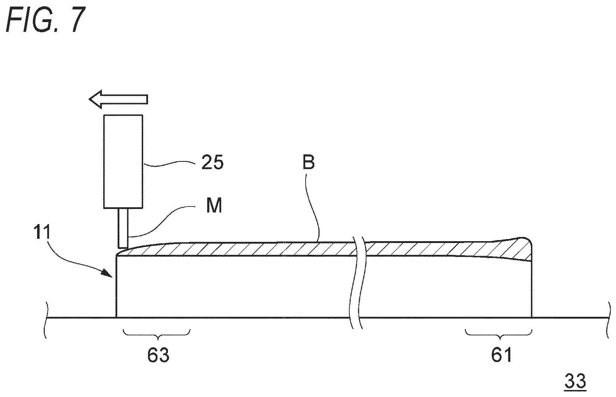

FIG. 7 is a diagram illustrating change characteristics in bead height of a starting edge portion and an end edge portion of a bead formation path of a weld bead.

It is preferable that the building procedure by the above-described additively manufacturing method is performed on all the weld beads to be formed. However, the building procedure may be applied to only a part of the building.

During the formation of the weld bead B, the thickness of the weld bead B in a starting edge portion 61 of the bead formation path is thicker than that in the other portions, and the thickness of the weld bead B in an end edge portion 63 thereof is thinner than that in the other portions. Therefore, in the starting edge portion 61 and the end edge portion 63, the bead height is required to be formed more accurately than the other portions. Accordingly, it is preferable that, in at least any one of the starting edge portion 61 and the end edge portion 63, the filler metal feed speed and the bead height described above are measured to determine the welding speed Vweld. Here, the entire additively manufactured object can be accurately built with a high dimensional accuracy regardless of the positions of the starting edge portion 61 and the end edge portion 63 of the weld bead.

In the additively manufacturing method having the present configuration, the bead height of the weld bead is estimated and acquired from the filler metal feed speed and is acquired by measuring the formed weld bead, and the deviation from the planned height, that is, the error of the bead height is acquired. The error of the bead height can be acquired for each layer of the weld bead or for each bead formation path and further by comparison to a previous layer or a previous bead formation path.

For example, it is preferable that, when the filler metal feed speed Vwire is measured and the reference welding speed corresponding to the measured filler metal feed speed is set to the reference speed (welding speed) at which the welding torch is relatively moved, the difference between the actual value and the planned height of the height of the formed weld bead is acquired in real time such that the reference welding speed changes depending on the acquired difference.

As a result, even when the height of the weld bead varies depending on welding conditions, welding positions, and the like while compensating for the variation in filler metal feed speed from the set value with respect to the reference welding speed, by measuring the variation in real time and adding the correction amount of the welding speed to the reference welding speed to compensate for the variation, the weld bead having an appropriate planned height can be formed at all times. As a result, an additively manufactured object made of a plurality of weld beads can be built with high shape accuracy. By performing the compensation depending on the welding speed, the building can be controlled independently of a heat source such as an arc.

The present invention is not limited to the above-described embodiment, and combinations of the configurations of the embodiment and changes and applications based on the description of the specification and well-known techniques by those skilled in the art can be expected from the present invention and are included in the range for which protection is sought, within the scope defined by the appended claims.

REFERENCE SIGNS LIST

11: additively manufactured object
13: welding robot
15: robot controller
17: power supply unit
19: filler metal supply unit
21: sensor controller
23: control unit
25: welding torch
27: shape sensor
29: reel
31: encoder
33: base plate
41: filler metal feed speed measuring unit
43: reference welding speed setting unit
45: bead height measuring unit
47: correction value setting unit
49: welding speed determination unit
51: planning line
61: starting edge portion
100: additive manufacturing device
M: filler metal

**Claims**

1. An additively manufacturing method in which, while moving a welding torch having a tip portion to which a filler metal is supplied, the supplied filler metal is melted and solidified to form a weld bead, and plural layers of the weld beads are deposited to build an additively manufactured object, the additively manufacturing method comprising:

   a step of measuring a filler metal feed speed at which the filler metal is fed to the welding torch during the formation of the weld bead;

a step of acquiring a reference welding speed that is a moving speed of the welding torch corresponding to the measured filler metal feed speed;

a step of measuring a height of the formed weld bead;

a step of acquiring a welding speed correction value with which the height of the weld bead to be formed is adjusted for reducing a difference between the measured actual height of the weld bead and a height of a tip of the filler metal that protrudes from the tip of the welding torch corresponding to a planned height of the weld bead;

a step of correcting the reference welding speed with the welding speed correction value and determining a welding speed at which the weld bead is formed; and

a step of forming the weld bead at the determined welding speed, wherein

the welding speed is determined by adding an amount of the welding speed that is adjusted to increase or decrease to compensate for the difference between the planned height and the measured height of the weld bead to the reference welding speed at least in any one portion of a starting edge portion and an end edge portion of a formation path of the weld bead.

2. The additively manufacturing method according to claim 1, wherein

the reference welding speed is set to a speed for reducing a difference between a predetermined planned height of the weld bead and an estimated height of the weld bead that is estimated from the measured filler metal feed speed.

3. The additively manufacturing method according to claim 2, wherein

the difference between the planned height and the estimated height is generated by a difference between the set value of the filler metal feed speed and the measured filler metal feed speed.

4. The additively manufacturing method according to claim 2, wherein

the difference between the planned height and the estimated height is acquired from an average height of the weld bead in the same layer.

5. The additively manufacturing method according to claim 3, wherein

the difference between the planned height and the estimated height is acquired from an average height of the weld bead in the same layer.

6. The additively manufacturing method according to claim 2, wherein

the difference between the planned height and the estimated height is acquired for each layer of the weld bead or for each bead formation path.

7. The additively manufacturing method according to claim 3, wherein

the difference between the planned height and the estimated height is acquired for each layer of the weld bead or for each bead formation path.

8. The additively manufacturing method according to any one of claims 1 to 7, wherein

the welding speed correction value is set to a value for reducing a difference between a predetermined planned height of the weld bead and the measured actual height of the weld bead.

9. The additively manufacturing method according to claim 8, wherein

the difference between the planned height and the actual height is acquired from at least any one portion of a starting edge portion and an end edge portion of a formation path of the weld bead

10. An additive manufacturing device in which, while moving a welding torch having a tip portion to which a filler metal is supplied, the supplied filler metal is melted and solidified to form a weld bead, and plural layers of the weld beads are deposited to build an additively manufactured object, the additive manufacturing device comprising:

a filler metal feed speed measuring unit configured to measure a filler metal feed speed at which the filler metal is fed to the welding torch during the formation of the weld bead;

a reference welding speed setting unit configured to acquire a reference welding speed that is a moving speed of the welding torch corresponding to the measured filler metal feed speed;

a bead height measuring unit configured to measure a height of the formed weld bead;

a correction value setting unit configured to acquire a welding speed correction value with which the height of the weld bead to be formed is adjusted for reducing a difference between the measured actual height of the weld bead and a height of a tip of the filler metal that protrudes from the tip of the welding torch corresponding to a predetermined planned height of the weld bead;

a welding speed determination unit configured to correct the reference welding speed with the welding speed correction value and to determine a welding speed at which the weld bead is formed; and

a bead forming unit configured to form the weld bead at the determined welding speed, wherein

the welding speed is determined by adding an amount of the welding speed that is adjusted to increase or decrease to compensate for the difference between the planned height and the measured height of the weld bead to the reference welding speed at least in any one portion of a starting edge portion and an end edge portion of a formation path of the weld bead; a control unit configured to integrally control each of the units of the additive manufacturing device.

11. A program causing the control unit of the additive manufacturing device of claim 10 to execute an additively manufacturing procedure in which, while moving a welding torch having a tip portion to which a filler metal is supplied, the supplied filler metal is melted and solidified to form a weld bead, and plural layers of the weld beads are deposited to build an additively manufactured object, the additive manufacturing procedure comprising:

a function of measuring a filler metal feed speed at which the filler metal is fed to the welding torch during the formation of the weld bead;

a function of acquiring a reference welding speed that is a moving speed of the welding torch corresponding to the measured filler metal feed speed;

a function of measuring a height of the formed weld bead;

a function of acquiring a welding speed correction value with which the height of the weld bead to be formed is adjusted for reducing a difference between the measured actual height of the weld bead and a height of a tip of the filler metal that protrudes from the tip of the welding torch corresponding to a predetermined planned height of the weld bead;

a function of correcting the reference welding speed with the welding speed correction value and determining a welding speed at which the weld bead is formed; and

a function of forming the weld bead at the determined welding speed, wherein

the welding speed is determined by adding an amount of the welding speed that is adjusted to increase or decrease to compensate for the difference between the planned height and the measured height of the weld bead to the reference welding speed at least in any one portion of a starting edge portion and an end edge portion of a formation path of the weld bead.

## Patentansprüche

1. Additives Fertigungsverfahren, in welchem während des Bewegens eines Schweißbrenners, der einen Spitzenabschnitt aufweist, dem ein Zusatzwerkstoff zugeführt wird, der zugeführte Zusatzwerkstoff geschmolzen und verfestigt wird, um eine Schweißraupe zu bilden, und mehrere Schichten der Schweißraupen aufgetragen werden, um ein additiv gefertigtes Objekt zu erstellen, wobei das additive Fertigungsverfahren umfasst:

einen Schritt des Messens einer Zusatzwerkstoffzuführgeschwindigkeit, bei welcher der Zusatzwerkstoff dem Schweißbrenner während der Bildung der Schweißraupe zugeführt wird;

einen Schritt des Ermittelns einer Referenzschweißgeschwindigkeit, die eine Bewegungsgeschwindigkeit des Schweißbrenners ist, entsprechend der gemessenen Zusatzwerkstoffzuführgeschwindigkeit;

einen Schritt des Messens einer Höhe der gebildeten Schweißraupe;

einen Schritt des Ermittelns eines Schweißgeschwindigkeitskorrekturwertes entsprechend einer geplanten Höhe der Schweißraupe, mit welchem die Höhe der zu bildenden Schweißraupe zur Verringerung eines Unterschieds zwischen der gemessenen tatsächlichen Höhe der Schweißraupe und einer Höhe einer Spitze des Zusatzwerkstoffs, der aus der Spitze des Schweißbrenners herausragt, angepasst wird;

einen Schritt des Korrigierens der Referenzschweißgeschwindigkeit mit dem Schweißgeschwindigkeitskorrekturwert und Bestimmens einer Schweißgeschwindigkeit, bei der die Schweißraupe gebildet wird; und

einen Schritt des Bildens der Schweißraupe bei der bestimmten Schweißgeschwindigkeit, wobei

die Schweißgeschwindigkeit bestimmt wird, indem ein Betrag der Schweißgeschwindigkeit, der angepasst wird, um diese zu erhöhen oder zu verringern, um den Unterschied zwischen der geplanten Höhe und der gemessenen Höhe der Schweißraupe auszugleichen, zu der Referenzschweißgeschwindigkeit zumindest in einem beliebigen Abschnitt eines Anfangskantenabschnitts und eines Endkantenabschnitts eines Bildungspfads der Schweißraupe addiert wird.

**2.** Additives Fertigungsverfahren nach Anspruch 1, wobei
die Referenzschweißgeschwindigkeit auf eine Geschwindigkeit zur Verringerung eines Unterschieds zwischen einer vorgegebenen geplanten Höhe der Schweißraupe und einer geschätzten Höhe der Schweißraupe, die aus der gemessenen Zusatzwerkstoffzuführgeschwindigkeit geschätzt wird, eingestellt wird.

**3.** Additives Fertigungsverfahren nach Anspruch 2, wobei
der Unterschied zwischen der geplanten Höhe und der geschätzten Höhe durch einen Unterschied zwischen dem Sollwert der Zusatzwerkstoffzuführgeschwindigkeit und der gemessenen Zusatzwerkstoffzuführgeschwindigkeit erzeugt wird.

**4.** Additives Fertigungsverfahren nach Anspruch 2, wobei
der Unterschied zwischen der geplanten Höhe und der geschätzten Höhe aus einer durchschnittlichen Höhe der Schweißraupe in derselben Schicht ermittelt wird.

**5.** Additives Fertigungsverfahren nach Anspruch 3, wobei
der Unterschied zwischen der geplanten Höhe und der geschätzten Höhe aus einer durchschnittlichen Höhe der Schweißraupe in derselben Schicht ermittelt wird.

**6.** Additives Fertigungsverfahren nach Anspruch 2, wobei
der Unterschied zwischen der geplanten Höhe und der geschätzten Höhe für jede Schicht der Schweißraupe oder für jeden Raupenbildungspfad ermittelt wird.

**7.** Additives Fertigungsverfahren nach Anspruch 3, wobei
der Unterschied zwischen der geplanten Höhe und der geschätzten Höhe für jede Schicht der Schweißraupe oder für jede Raupenbildungspfad ermittelt wird.

**8.** Additives Fertigungsverfahren nach einem der Ansprüche 1 bis 7, wobei
der Schweißgeschwindigkeitskorrekturwert auf einen Wert zur Verringerung eines Unterschieds zwischen einer vorgegebenen geplanten Höhe der Schweißraupe und einer geschätzten Höhe der Schweißraupe eingestellt wird.

**9.** Additives Fertigungsverfahren nach Anspruch 8, wobei
der Unterschied zwischen der geplanten Höhe und der tatsächlichen Höhe aus zumindest einem beliebigen Abschnitt eines Anfangskantenabschnitts und eines Endkantenabschnitts eines Bildungspfads der Schweißraupe ermittelt wird.

**10.** Additive Fertigungsvorrichtung, in welcher während des Bewegens eines Schweißbrenners, der einen Spitzenabschnitt aufweist, dem ein Zusatzwerkstoff zugeführt wird, der zugeführte Zusatzwerkstoff geschmolzen und verfestigt wird, um eine Schweißraupe zu bilden, und mehrere Schichten der Schweißraupen aufgetragen werden, um ein additiv gefertigtes Objekt zu erstellen, wobei die additive Fertigungsvorrichtung umfasst:

eine Zusatzwerkstoffzuführgeschwindigkeitsmesseinheit, konfiguriert, um eine Zusatzwerkstoffzuführgeschwindigkeit zu messen, bei welcher der Zusatzwerkstoff dem Schweißbrenner während der Bildung der Schweißraupe zugeführt wird;
eine Referenzschweißgeschwindigkeitseinstelleinheit, konfiguriert, um eine Referenzschweißgeschwindigkeit, die eine Bewegungsgeschwindigkeit des Schweißbrenners ist, entsprechend der gemessenen Zusatzwerkstoffzuführgeschwindigkeit zu ermitteln;
eine Raupenhöhenmesseinheit, konfiguriert, um eine Höhe der gebildeten Schweißraupe zu messen;
eine Korrekturwerteinstelleinheit, konfiguriert, um einen Schweißgeschwindigkeitskorrekturwert entsprechend einer geplanten Höhe der Schweißraupe zu ermitteln, mit welchem die Höhe der zu bildenden Schweißraupe zur Verringerung eines Unterschieds zwischen der gemessenen tatsächlichen Höhe der Schweißraupe und einer Höhe einer Spitze des Zusatzwerkstoffs, der aus der Spitze des Schweißbrenners herausragt, angepasst wird;
eine Schweißgeschwindigkeitsbestimmungseinheit, konfiguriert, um die Referenzschweißgeschwindigkeit mit dem Schweißgeschwindigkeitskorrekturwert zu korrigieren und um eine Schweißgeschwindigkeit zu bestimmen, bei welcher die Schweißraupe gebildet wird; und
eine Raupenbildungseinheit, konfiguriert, um die Schweißraupe bei der bestimmten Schweißgeschwindigkeit zu bilden, wobei
die Schweißgeschwindigkeit bestimmt wird, indem ein Betrag der Schweißgeschwindigkeit, der angepasst wird, um diese zu erhöhen oder zu verringern, um den Unterschied zwischen der geplanten Höhe und der gemessenen Höhe der Schweißraupe auszugleichen, zu der Referenzschweißgeschwindigkeit zumindest in einem beliebigen Abschnitt eines Anfangskantenabschnitts und eines Endkantenabschnitts eines Bildungspfads der Schweißraupe addiert wird;

eine Steuereinheit, konfiguriert, um jede der Einheiten der additiven Fertigungsvorrichtung vollständig zu steuern.

11. Programm, das die Steuereinheit der additiven Fertigungsvorrichtung nach Anspruch 10 veranlasst, einen additiven Fertigungsvorgang auszuführen, bei welchem während des Bewegens eines Schweißbrenners, der einen Spitzenabschnitt aufweist, dem ein Zusatzwerkstoff zugeführt wird, der zugeführte Zusatzwerkstoff geschmolzen und verfestigt wird, um eine Schweißraupe zu bilden, und mehrere Schichten der Schweißraupen aufgetragen werden, um ein additiv gefertigtes Objekt zu erstellen, wobei der additiven Fertigungsvorgang umfasst:

eine Funktion des Messens einer Zusatzwerkstoffzufürgeschwindigkeit, bei welcher der Zusatzwerkstoff dem Schweißbrenner während der Bildung der Schweißraupe zugeführt wird;

eine Funktion des Ermittelns einer Referenzschweißgeschwindigkeit, die eine Bewegungsgeschwindigkeit des Schweißbrenners ist, entsprechend der gemessenen Zusatzwerkstoffzufürgeschwindigkeit;

eine Funktion des Messens einer Höhe der gebildeten Schweißraupe;

eine Funktion des Ermittelns eines Schweißgeschwindigkeitskorrekturwerts entsprechend einer geplanten Höhe der Schweißraupe, mit welchem die Höhe der zu bildenden Schweißraupe zur Verringerung eines Unterschieds zwischen der gemessenen tatsächlichen Höhe der Schweißraupe und einer Höhe einer Spitze des Zusatzwerkstoffs, der aus der Spitze des Schweißbrenners herausragt, angepasst wird;

eine Funktion des Korrigierens der Referenzschweißgeschwindigkeit mit dem Schweißgeschwindigkeitskorrekturwert und Bestimmens einer Schweißgeschwindigkeit, bei der die Schweißraupe gebildet wird; und

eine Funktion des Bildens der Schweißraupe bei der bestimmten Schweißgeschwindigkeit, wobei die Schweißgeschwindigkeit bestimmt wird, indem ein Betrag der Schweißgeschwindigkeit, der angepasst wird, um diese zu erhöhen oder zu verringern, um den Unterschied zwischen der geplanten Höhe und der gemessenen Höhe der Schweißraupe auszugleichen, zu der Referenzschweißgeschwindigkeit zumindest in einem beliebigen Abschnitt eines Anfangskantenabschnitts und eines Endkantenabschnitts eines Bildungspfads der Schweißraupe addiert wird.

## Revendications

1. Procédé de fabrication additive dans lequel, tout en déplaçant un chalumeau de soudage ayant une portion de pointe à laquelle un métal d'apport est fourni, le métal d'apport fourni est fondu et solidifié pour former un cordon de soudure, et une pluralité de couches des cordons de soudure sont déposées pour construire un objet fabriqué de manière additive, le procédé de fabrication additive comprenant :

une étape de mesure d'une vitesse d'alimentation en métal d'apport à laquelle le métal d'apport est alimenté au chalumeau de soudage au cours de la formation du cordon de soudure ;

une étape d'acquisition d'une vitesse de soudage de référence qui est une vitesse de déplacement du chalumeau de soudage correspondant à la vitesse d'alimentation en métal d'apport mesurée ;

une étape de mesure d'une hauteur du cordon de soudure formé ;

une étape d'acquisition d'une valeur de correction de vitesse de soudage avec laquelle la hauteur du cordon de soudure devant être formé est ajustée pour réduire une différence entre la hauteur réelle mesurée du cordon de soudure et

une hauteur d'une pointe du métal d'apport qui fait saillie de la pointe du chalumeau de soudage correspondant à une hauteur planifiée du cordon de soudure ;

une étape de correction de la vitesse de soudage de référence avec la valeur de correction de vitesse de soudage et de détermination d'une vitesse de soudage à laquelle le cordon de soudure est formé ; et

une étape de formation du cordon de soudure à la vitesse de soudage déterminée,

dans lequel

la vitesse de soudage est déterminée en ajoutant une quantité de la vitesse de soudage qui est ajustée pour augmenter ou diminuer pour compenser la différence entre la hauteur planifiée et la hauteur mesurée du cordon de soudure à la vitesse de soudage de référence au moins dans toute portion quelconque d'une portion de bord de départ et d'une portion de bord de fin d'un trajet de formation du cordon de soudure.

2. Procédé de fabrication additive selon la revendication 1, dans lequel la vitesse de soudage de référence est réglée sur une vitesse pour réduire une différence entre une hauteur planifiée prédéterminée du cordon de soudure et une hauteur estimée du cordon de soudure qui est estimée à partir de la vitesse d'alimentation en métal d'apport mesurée.

3. Procédé de fabrication additive selon la revendication 2, dans lequel la différence entre la hauteur planifiée et la hauteur estimée est générée par une différence entre la valeur réglée de la vitesse d'alimentation en métal d'apport et la vitesse d'alimentation en métal d'apport mesurée.

4. Procédé de fabrication additive selon la revendication 2, dans lequel la différence entre la hauteur planifiée et la hauteur estimée est acquise à partir d'une hauteur moyenne du cordon de soudure dans la même couche.

5. Procédé de fabrication additive selon la revendication 3, dans lequel la différence entre la hauteur planifiée et la hauteur estimée est acquise à partir d'une hauteur moyenne du cordon de soudure dans la même couche.

6. Procédé de fabrication additive selon la revendication 2, dans lequel la différence entre la hauteur planifiée et la hauteur estimée est acquise pour chaque couche du cordon de soudure ou pour chaque trajet de formation de cordon.

7. Procédé de fabrication additive selon la revendication 3, dans lequel
la différence entre la hauteur planifiée et la hauteur estimée est acquise pour chaque couche du cordon de soudure ou pour chaque trajet de formation de cordon.

8. Procédé de fabrication additive selon l'une quelconque des revendications 1 à 7, dans lequel
la valeur de correction de vitesse de soudage est réglée sur une valeur pour réduire une différence entre une hauteur planifiée prédéterminée du cordon de soudure et la hauteur réelle mesurée du cordon de soudure.

9. Procédé de fabrication additive selon la revendication 8, dans lequel
la différence entre la hauteur planifiée et la hauteur réelle est acquise à partir d'au moins toute portion quelconque d'une portion de bord de départ et d'une portion de bord de fin d'un trajet de formation du cordon de soudure.

10. Dispositif de fabrication additive dans lequel, tout en déplaçant un chalumeau de soudage ayant une portion de pointe à laquelle un métal d'apport est fourni, le métal d'apport fourni est fondu et solidifié pour former un cordon de soudure, et une pluralité de couches des cordons de soudure sont déposées pour construire un objet fabriqué de manière additive, le dispositif de fabrication additive comprenant :

un module de mesure de vitesse d'alimentation en métal d'apport configuré pour mesurer une vitesse d'alimentation en métal d'apport à laquelle le métal d'apport est alimenté au chalumeau de soudage au cours de la formation du cordon de soudure ;
un module de réglage de vitesse de soudage de référence configuré pour acquérir une vitesse de soudage de référence qui est une vitesse de déplacement du chalumeau de soudage correspondant à la vitesse d'alimentation en métal d'apport mesurée ;
un module de mesure de hauteur de cordon configuré pour mesurer une hauteur du cordon de soudure formé ;
un module de réglage de valeur de correction configuré pour acquérir une valeur de correction de vitesse de soudage avec laquelle la hauteur du cordon de soudure devant être formé est ajustée pour réduire une différence entre la hauteur réelle mesurée du cordon de soudure et une hauteur d'une pointe du métal d'apport qui fait saillie de la pointe du chalumeau de soudage correspondant à une hauteur planifiée prédéterminée du cordon de soudure ;
un module de détermination de vitesse de soudage configuré pour corriger la vitesse de soudage de référence avec la valeur de correction de vitesse de soudage et pour déterminer une vitesse de soudage à laquelle le cordon de soudure est formé ; et
un module de formation de cordon configuré pour former le cordon de soudure à la vitesse de soudage déterminée, dans lequel
la vitesse de soudage est déterminée en ajoutant une quantité de la vitesse de soudage qui est ajustée pour augmenter ou diminuer pour compenser la différence entre la hauteur planifiée et la hauteur mesurée du cordon de soudure à la vitesse de soudage de référence au moins dans toute portion quelconque d'une portion de bord de départ et d'une portion de bord de fin d'un trajet de formation du cordon de soudure ;
un module de commande configuré pour commander intégralement chacun des modules du dispositif de fabrication additive.

11. Programme amenant le module de commande du dispositif de fabrication additive selon la revendication 10 à exécuter une procédure de fabrication additive dans laquelle, tout en déplaçant un chalumeau de soudage ayant une portion de pointe à laquelle un métal d'apport est fourni, le métal d'apport fourni est fondu et solidifié pour former un cordon de soudure, et une pluralité de couches des cordons de soudure sont déposées pour construire un objet fabriqué de manière additive, la procédure de fabrication additive comprenant :

une fonction de mesure d'une vitesse d'alimentation en métal d'apport à laquelle le métal d'apport est alimenté au chalumeau de soudage au cours de la formation du cordon de soudure ;

une fonction d'acquisition d'une vitesse de soudage de référence qui est une vitesse de déplacement du chalumeau de soudage correspondant à la vitesse d'alimentation en métal d'apport mesurée ;

une fonction de mesure d'une hauteur du cordon de soudure formé ;

une fonction d'acquisition d'une valeur de correction de vitesse de soudage avec laquelle la hauteur du cordon de soudure devant être formé est ajustée pour réduire une différence entre la hauteur réelle mesurée du cordon de soudure et

une hauteur d'une pointe du métal d'apport qui fait saillie de la pointe du chalumeau de soudage correspondant à une hauteur planifiée prédéterminée du cordon de soudure ;

une fonction de correction de la vitesse de soudage de référence avec la valeur de correction de vitesse de soudage et de détermination d'une vitesse de soudage à laquelle le cordon de soudure est formé ; et

une fonction de formation du cordon de soudure à la vitesse de soudage déterminée, dans lequel la vitesse de soudage est déterminée en ajoutant une quantité de la vitesse de soudage qui est ajustée pour augmenter ou diminuer pour compenser la différence entre la hauteur planifiée et la hauteur mesurée du cordon de soudure à la vitesse de soudage de référence au moins dans toute portion quelconque d'une portion de bord de départ et d'une portion de bord de fin d'un trajet de formation du cordon de soudure.

*FIG. 1*

FIG. 2

CONTROL UNIT — 23

FILLER METAL FEED
SPEED MEASURING UNIT
— 41

ENCODER — 31

REFERENCE WELDING
SPEED SETTING UNIT
— 43

DATABASE — DB

BEAD HEIGHT
MEASURING UNIT
— 45

SENSOR
CONTROLLER
— 21

SHAPE SENSOR — 27

CORRECTION VALUE
SETTING UNIT
— 47

BEAD FORMING UNIT — 35

ROBOT CONTROLLER — 15

WELDING SPEED
DETERMINATION UNIT
— 49

15 — WELDING
ROBOT

POWER
SUPPLY UNIT — 17

EP 4 306 321 B1

16

*FIG. 3*

START

S11

FORM WELD BEAD

| MEASURE FILLER METAL FEED SPEED Vwire | — S1a |

| MEASURE PROFILE OF WELD BEAD | — S1b |

| ACQUIRE REFERENCE WELDING SPEED Vweld_0(Vwire) for Vwire | — S2 |

| ACQUIRE PLANNED HEIGHT ERROR $\Delta h$ | — S3 |

| ACQUIRE WELDING SPEED CORRECTION VALUE Vweld($\Delta h$) | — S4 |

CALCULATE WELDING SPEED
Vweld = Vweld_0(Vwire) + Vweld($\Delta h$) — S5

CHANGE WELDING SPEED
Vweld IN REAL TIME — S6

IS FORMATION OF WELD BEAD COMPLETED? — S12

NO

YES

END

*FIG. 4*

FIG. 5

## FIG. 6

EP 4 306 321 B1

*FIG. 7*